# EUROPÄISCHE PATENTANMELDUNG

(11) **EP 1 978 437 A2**
(43) Veröffentlichungstag der Anmeldung: **08.10.2008**
(21) Anmeldenummer: 07405370.3
(22) Anmeldetag: 27.12.2007
(51) Int. Cl.: G06F 3/02, G06F 3/023

(54) **Vereinfachtes, leicht zu bedienendes Alphabet-Tastenfeld für Computer-Tastaturen**

(30) Priorität: 05.04.2007 CH 5792007
(71) Anmelder: Lüber, Heinrich, 5400 Baden (CH)
(72) Erfinder: Lüber, Heinrich, 5400 Baden (CH)

(57) **Zusammenfassung**

Mit dem neuen leicht zu bedienenden Alphabet-Tastenfeld für Computer-Tastaturen Fig.1, hat man eine grosse Übersicht über alle zum Schreiben notwendigen Buchstaben, Satzzeichen und Sonderzeichen.

Die Bedienung der zwei Schifttasten und einiger Zeichentasten ist beim konventionellen Tastenfeld etwas umständlich und somit auch zeitaufwendig. Das Antippen und solange gedrückt halten der ganz links und rechts aussen angeordneten Shifttasten, bis der gewünschte Buchstabe, ein Satzzeichen oder ein Sonderzeichen getippt ist, ist beim konventionellen Tastenfeld besonders aufwendig. Die bisherige lange Leertaste ist somit beim neuen Alphabet-Tastenfeld nach Fig.1, in eine Shifttaste und eine Leertaste aufgeteilt. Satz- und Sonderzeichen, die bisher in Dreiergruppen auf Einzeltasten angeordnet waren und zusammen mit der Shifttaste, der Leertaste oder der Alt Gr -Taste angesteuert wurden, sind neu in Zweiergruppen auf Einzeltasten angeordnet. Somit benötigt jeweils nur das obere Zeichen das Antippen der Shifttaste. Die dafür notwendigen 3 zusätzlichen Tasten sind an der Stelle der bisherigen Shifttasten plaziert.

## Beschreibung

Die Erfindung betrifft ein vereinfachtes, leicht zu bedienendes Alphabet-Tastenfeld für Computer-Tastaturen.

Das Alphabet-Tastenfeld der Computer-Tastaturen ist, nebst den separat angeordneten Funktionstasten sowie dem Ziffem-Tastenfeld, der wichtigste Teil betreffend die Bedienung und dem Arbeiten am Computer. Die Bedienung zweier Funktionstasten und einzelner Zeichentasten ist beim konventionellen Tastenfeld etwas umständlich und somit zeitaufwendig. Dies insbesonders für Anfänger und Nicht-Vielschreiber. Das Antippen und solange gedrückt halten der ganz links und rechts aussen angeordneten Shifttasten, bis der gewünschte Buchstabe, ein Satzzeichen oder ein Sonderzeichen getippt ist, ist besonders aufwendig. Für Schreibende, die von Ihrer Anatomie her etwas kleinere Hände haben, erfordert die Betätigung und das Festhalten der Shifttaste reinste Fingerakrobatik.

Das nachfolgend beschriebene Alphabet-Tastenfeld ist so konzipiert, dass die oben aufgezählten Umständlichkeiten wesentlich verringert sind. Die geometrische Anordnung der bisher gewohnten Alphabettasten, der Zifferntasten sowie der Funktionstasten, ausser der Shifttasten und der Leertaste, ist nicht verändert. Die bisherige, lange Leertaste ist als Ersatz der bisherigen zwei Shifttasten in eine Shifttaste und eine Leertaste aufgeteilt. Wenn notwendig, beziehungsweise praktisch, kann man die Shifttaste mit der Leertaste vertauschen.

Satz- und Sonderzeichen, die bisher in Dreiergruppen auf Einzeltasten angeordnet waren und zusammen mit der Shifttaste, der Leertaste oder der Alt Gr -Taste angesteuert wurden, sind neu in Zweiergruppen auf Einzeltasten angeordnet. Somit benötigt jeweils nur das obere Zeichen das Antippen der Shifttaste. Die dafür notwendigen 3 zusätzlichen Tasten sind an der Stelle der bisherigen Shifttasten plaziert.

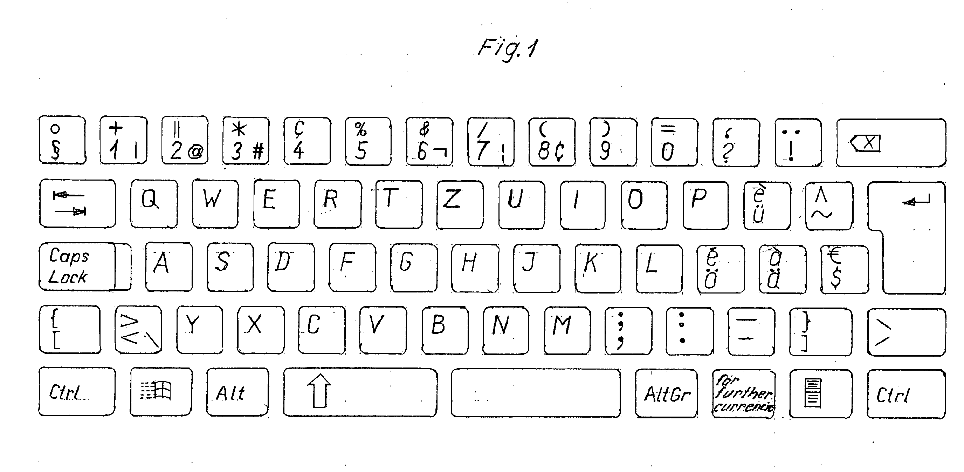

Die Verteilung der Satz- und Sonderzeichen auf die 2 Tasten rechtsseitig der Zifferntaste 0 und auf die Taste rechtsseitig der ü/è-Taste sowie auf die 3 zusätzlichen Tasten an Stelle der bisherigen Shifttasten, kann aus der Zeichnung Fig. 1 ersehen werden.

Die Sonderzeichen ¦ @ # ¬ | ¢, rechtsseitig der Ziffern 1,2,3,6,7 und 8 auf den Zifferntasten, werden wie bis anhin zusammen mit der Alt Gr -Taste angesteuert. Eine wesentliche Vereinfachung ist aber der Vorteil, dass die viel verwendeten Satzzeichen ? und ! direkt, ohne Bedienung der Shifttaste, abgerufen werden können. Eine Taste ist unbelegt. Sie kann folglich für weitere Währungszeichen oder anderes benützt werden.

Beim Wechsel von der bisherigen konventionellen Tastatur zur neuen Schnellschreiber Tastatur ist eine Umgewöhnung für noch nicht sehr geübte Tastatur-Bediener innert kurzer Zeit zu bewältigen. Für Vielschreiber ist dank derer angeeigneten Fingerfertigkeiten eine Umgewöhnung noch schneller möglich.

### Bezeichnung der Tastatur:

- **Fig. 1** Schnellschreiber Tastatur: auf Englisch: Quickwriter Keyboard

### Vorgehensweise beim Schreiben mit der neuen Tastatur:

Die Kleinbuchstaben a bis z sowie ö, ä und ü werden wie bisher durch Tippen der entsprechenden Taste geschrieben.

Die Gossbuchstaben A bis Z sowie Ö, Ä und Ü werden aber durch kurzes Antippen der Shifttaste und anschliessendes Tippen der entsprechenden Buchstabentaste geschrieben. Die Sonder-Kleinbuchstaben é, è und à werden wie bisher durch Gedrückthalten der Shifttaste und anschliessendesTippen der entsprechenden Taste geschrieben.

Die Sonder-Grossbuchstaben E, E und À werden wie bisher durch Einschalten von "Caps Lock" und anschliessendes Gedrückthalten der Shifttaste und dann Tippen der entsprechenden Sonder-Buchstabentaste geschrieben.

Die Sonderzeichen ¦ @ # ¬ | ¢, rechtsseitig der Ziffern 1,2,3,6,7 und 8 auf den Zifferntasten, werden wie bis anhin zusammen mit der "Alt Gr" -Taste geschrieben. Die "Alt Gr" - Taste muss aber vor dem Tippen des gewünschten Sonderzeichens nur angetippt werden, sie muss also nicht festgehalten werden bis das betreffende Sonderzeichen getippt ist.

### Vereinfachung der Anzahl zu drückender Steuertasten beim Schreiben:

Nach Satzzeichen, wie: Punkt, Doppelpunkt, Komma, Strichpunkt, Fragezeichen, Ausrufezeichen, % und Währungszeichen muss jeweils kein Leerschlag gemacht werden. Der Leerschlag folgt jeweils automatisch. Es kann mit dem nächsten Zeichen, respektive dem nächsten Wort weitergeschrieben werden.

Vor und nach den Zeichen: + = & und Klammem-auf und Klammern-zu, muss jeweils kein Leerschlag gemacht werden. Das System tut dies automatisch.

Folgt auf ein geschriebenes Zeichen oder Wort ein Grossbuchstaben respektive ein gross geschriebenes Wort, so muss vor dem Grossbuchstaben kein Leerschlag gemacht werden. Das System tut dies wiederum automatisch.

Vor der ersten Ziffer einer kompletten Zahl muss auch kein Leerschlag gemacht werden. Tippt man Versehens oder aus Gründen der bisherigen Routine trotzdem einen Leerschlag, so wird nur ein einziger Leerschlag vermerkt.

### Schreibvergleiche: Schreiben mit der konventionellen und der neuen Tastatur

| | | |
|---|---|---|
| Festlegung: | Zeichen für Leerschlag | ¬ |
| | Zeichen für Shift | ^ |

### 1. Beispiel:

### Konventionelle Tastatur:

Morgen¬gehe¬ich¬mit¬meiner¬^Katze¬zum¬^Tierarzt.¬Verschreibt¬er¬ihr¬wohl¬ein¬^ Medikament^?
Um diese 2 Sätze zu schreiben sind: 13 Leerschläge und 4 Shifttaste-halten notwendig. Neue Tastatur:
Morgen¬gehe¬ich¬mit¬meiner^Katze¬zum^Tierarzt. Verschreibt¬er¬ihr¬wohl¬ein^ Medikament?
Um diese 2 Sätze zu schreiben sind: 9 Leerschläge und 3 Shifttaste antippen notwendig.

### 2. Beispiel:

### Konventionelle Tastatur:

Heute¬morgen¬hatte¬es¬15^°¬^C^!
Um diesen Satz zu schreiben sind: 5 Leerschläge und 3 Shifttaste-halten notwendig. Neue Tastatur:
Heute¬morgen¬hatte¬es 15^° C!
Um diesen Satz zu schreiben sind: 3 Leerschläge und 1 Shifttaste antippen notwendig.

## Patentansprüche

1. Leicht zu bedienendes Alphabet-Tastenfeld für Computer-Tastaturen Fig.1, das eine grosse Übersicht über alle zum Schreiben notwendigen Buchstaben, Satzzeichen und Sonderzeichen ermöglicht und eine wesentlich vereinfachte Bedienung der Shifttaste aufweist, **dadurch gekennzeichnet, dass** 6 der mit jeweils 3 Zeichen, im bisherigen konventionellen Alphabet-Tastenfeld, bestückten Tasten, nur noch jeweils 2 Zeichen aufweisen, wovon für das jeweilige obere Zeichen die Shifttaste angetippt werden muss.

2. Leicht zu bedienendes Alphabet-Tastenfeld gemäss Anspruch 1,
**dadurch gekennzeichnet, dass** die 2 auf dem Tastaturfeld bisher links und rechts angeordneten Shifttasten wegfallen, und als Ersatz gemäss Fig. 1 die lange Leertaste zweigeteilt ist und zwar in eine Shifttaste und die Leertaste.

3. Leicht zu bedienendes Alphabet-Tastenfeld gemäss Anspruch 2,
**dadurch gekennzeichnet, dass** die bisherige rechtsseitige Shifttaste durch zwei Einzeltasten und die linksseitige Shifttaste durch eine Einzeltaste ersetzt sind, die neu mit Sonderzeichen gemäss Fig. 1 belegt sind.

4. Leicht zu bedienendes Alphabet-Tastenfeld gemäss Anspruch 1,
**dadurch gekennzeichnet, dass** für das Schreiben der Grossbuchstaben und des grossen Ö, Ä und Ü sowie auch des jeweiligen oberen Zeichens auf einer entsprechenden Taste, die Shifttaste nicht gedrückt gehalten, sondern nur angetippt werden muss.

5. Leicht zu bedienendes Alphabet-Tastenfeld gemäss Anspruch 1,
**dadurch gekennzeichnet, dass** die Sonder-Keinbuchstaben e, e und à wie bisher durch Gedrückthalten der Shifttaste und für die grossen E, E und À zusätzlich wie bisher vorher noch "Caps Lock" eingeschaltet werden muss.

6. Leicht zu bedienendes Alphabet-Tastenfeld gemäss Anspruch 1,
**dadurch gekennzeichnet, dass** beim Schreiben der Sonderzeichen: ¦ @ # ¬ | ¢, die "Alt Gr" -Taste nur angetippt und nicht festgehalten werden muss, bis das betreffende Sonderzeichen geschrieben ist.

7. Leicht zu bedienendes Alphabet-Tastenfeld gemäss Anspruch 1,
**dadurch gekennzeichnet, dass** nach Satzzeichen, wie: . : , ; ? ! % und Währungszeichen jeweils kein Leerschlag gemacht werden muss. Der Leerschlag folgt jeweils automatisch.

8. Leicht zu bedienendes Alphabet-Tastenfeld gemäss Anspruch 1,
**dadurch gekennzeichnet, dass** vor und nach den Zeichen: + = & und Klammernauf und Klammern-zu, jeweils kein Leerschlag gemacht werden muss. Das System tut dies automatisch.

9. Leicht zu bedienendes Alphabet-Tastenfeld gemäss Anspruch 1,
**dadurch gekennzeichnet, dass**, wenn auf ein geschriebenes Zeichen oder Wort ein Grossbuchstaben respektive ein gross geschriebenes Wort folgt, kein Leerschlag vor dem Grossbuchstaben gemacht werden muss. Das System tut dies automatisch.
